# EUROPÄISCHE PATENTSCHRIFT

(11) **EP 0 759 042 B1**
(45) Veröffentlichungstag und Bekanntmachung des Hinweises auf die Patenterteilung: **14.06.2000**
(21) Anmeldenummer: 95915177.0
(22) Anmeldetag: 31.03.1995
(51) Int. Cl.: C08G 18/10, C08J 9/14

(54) **ZU HARTEN POLYURETHANSCHAUMSTOFFEN FÜHRENDE MISCHUNGEN**
MIXTURES FOR PREPARING HARD POLYURETHANE FOAMS
MELANGES PERMETTANT D'OBTENIR DES MOUSSES DURES EN POLYURETHANNE

(30) Priorität: 13.04.1994 DE 4412639; 11.05.1994 DE 4416623
(43) Veröffentlichungstag der Anmeldung: 26.02.1997
(73) Patentinhaber: BAYER AG, 51368 Leverkusen (DE)
(72) Erfinder: GRUSS, Peter, D-51429 Bergisch Gladbach (DE); KAPPS, Manfred, D-51467 Bergisch Gladbach (DE); VEHLEWALD, Peter, D-42799 Leichlingen (DE); RETTIG, Rainer, D-51789 Lindlar (DE)
(86) Internationale Anmeldenummer: EP9501207
(87) Internationale Veröffentlichungsnummer: WO9528430

(56) Entgegenhaltungen:
- EP-A- 0 345 580
- EP-A- 0 477 920
- EP-A- 0 543 536
- DE-A- 3 017 298
- DE-A- 4 038 401
- Becker/Braun, Kunststoff-Handbuch, Bd. 7, Polyurethane [1983], Carl Hanser Verlag, München, S. 248, 261, 262, 310 und 311
- Encyclopedia of Polymer Science and Engineering, Bd. 13 [1988], John Wiley & Sons, New York, S. 256 und 257

## Beschreibung

Es ist bekannt, Polyurethan-Ein- und -Zweikomponentenschaumstoffe herzustellen, indem man Mischungen von Polyolen, Schaumstabilisatoren, Weichmachern, Flammschutzmitteln, Beschleunigern und anderen Hilfsmitteln im Überschuß mit Di-und/oder Polyisocyanaten in Gegenwart von verflüssigten Treibgasen zu freien Isocyanatgruppen aufweisenden Prepolymeren umsetzt. Diese Reaktion erfolgt üblicherweise in Druckbehältern, z.B. in Aerosoldosen bzw. (für Zweikomponentenschaumstoffe) in drucklosen Zweikammerbehältem.

Beim Austragen der zum Einkomponentenschaum führenden Mischung bläht die Reaktionsmasse durch Verdampfen des Treibmittels auf (Frothing). Durch Reaktion mit Feuchtigkeit (z.B. Umgebungsfeuchtigkeit) wird der fertige Schaumstoff erhalten. Dieser kann in vielfältiger Weise eingesetzt werden, z.B. für Füll- und Befestigungszwecke (z.B. für die Türzargenmontage). Im Falle der Verwendung von Zweikomponentenschaumsystemen wird in der Regel die Mischung durch Umsetzung mit mindestens zwei aktive Wasserstoffatome aufweisende Verbindungen als Vernetzer ausgehärtet. Als Vernetzer kommen dabei z.B. Wasser und/oder organische Hydroxyl- und/oder Amino-Verbindungen in Frage.

Überraschenderweise wurde nun festgestellt, daß es durch Mitverwendung von speziellen Polyisocyanat-Prepolymeren gelingt, einerseits den Gehalt an monomerem Polyisocyanat niedrig zu halten (wie auch vom Gesetzgeber gefordert), und andererseits zu harten Polyurethanschaumstoffen mit für die Praxis ausreichenden Eigenschaften zu gelangen.

Gegenstand der Erfindung sind zu harten Polyurethanschaumstoffen führende, in einem Druckbehälter vorliegende Mischungen enthaltend
a) Isocyanatgruppen aufweisende Prepolymere, erhältlich durch Umsetzung von Isocyanurat- und gegebenenfalls Urethangruppen aufweisenden Polyisocyanaten mit einem Gehalt von Isocyanuratgruppen von mind. 3 Gew.-% mit Verbindungen mit mindestens zwei gegenüber Isocyanaten reaktionsfähigen Wasserstoffatomen vom Molekulargewicht 62 bis 10 000, wobei der Gehalt an monomerem Polyisocyanat im Prepolymer unter 2 Gew.-% beträgt,
b) an sich bekannte Hilfs- und Zusatzstoffe und
c) Treibmittel mit einem Siedepunkt unterhalb von 0°C/760 mm Hg.

Erfindungsgemäß ist bevorzugt, daß
- als Isocyanurat- und gegebenenfalls Urethangruppen aufweisendes Polyisocyanat ein aliphatisches und/oder cycloaliphatisches Polyisocyanat verwendet wird,
- als Isocyanurat- und gegebenenfalls Urethangruppen aufweisendes Polyisocyanat Isophorondiisocyanat verwendet wird,
- als Isocyanurat- und gegebenenfalls Urethangruppen aufweisendes Polyisocyanat Hexamethylendiisocyanat verwendet wird,
- als Isocyanurat- und gegebenenfalls Urethangruppen aufweisendes Polyisocyanat eine Mischung aus einem aliphatischen und einem aromatischen Polyisocyanat verwendet wird,
- als Isocyanurat- und gegebenenfalls Urethangruppen aufweisendes Polyisocyanat ein Toluylendiisocyanat verwendet wird, dessen Gehalt an Isocyanuratgruppen mindestens 3 Gew.-% beträgt,
- als Treibmittel Tetrafluorethan, Difluorethan, Dimethylether, Propan, Butan, Kohlendioxid, Distickstoffoxid, gegebenenfalls in Kombination, verwendet werden.

Die Erfindung betrifft auch Verfahren zur Herstellung harter Polyurethanschaumstoffe, durch Aushärtung der erfindungsgemäßen Mischungen nach ihrem Austreten aus einem Druckbehälter durch Einwirkung von Feuchtigkeit ("Einkomponentenschaumstoffe") bzw. durch Aushärtung der Mischungen durch Umsetzung mit reaktionsfähige Wasserstoffatome aufweisenden Verbindungen vom Molekulargewicht 18 bis 6 000 als Vernetzer ("Zweikomponentenschaumstoffe"). Diese Vernetzer sind an sich bekannt und sind beispielsweise Wasser oder organische Verbindungen von Ethylenglykol, Butandiol oder Trimethylolpropan.

Ausgangskomponenten für die erfindungsgemäß einzusetzenden Prepolymeren a) sind:
1) Isocyanurat- und gegebenenfalls Urethangruppen aufweisende aliphatische, cycloaliphatische, araliphatische, aromatische und heterocyclische Polyisocyanate. Die durch Isocyanurat- und gegebenenfalls Urethangruppen zu modifizierenden Ausgangsisocyanaten sind z.B. von W. Siefken in Justus Liebigs Annalen der Chemie, 562, Seiten 75 bis 136, beschrieben und sind beispielsweise solche der Formel

   Q(NCO)ₙ

   in der
   n = 2-4, vorzugsweise 2 und 3,
   und
   Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden aliphatische und/oder cycloaliphatische Polyisocyanate, vorzugsweise Isophorondiisocyanat und Hexamethylendiisocyanat, ferner z.B. das 2,4- und/oder 2,6-Toluylendiisocyanat, sowie Gemische von aliphatischen und/oder cycloaliphatischen Polyisocyanaten mit aromatischen Polyisocyanaten, in denen die aromatischen Polyisocyanate vorzugsweise zu weniger als 60 Gew.-% im Gemisch vorliegen.
   Diese Polyisocyanate werden in an sich bekannter Weise in Isocyanurat- und gegebenenfalls Urethangruppen aufweisende Polyisocyanate übergeführt, wobei der Gehalt an Isocyanuratgruppen mindestens 3 Gew.-% betragen soll.
2) Verbindungen mit mindestens zwei gegenüber Isocyanaten reaktionsfähigen Wasserstoffatomen von einem Molekulargewicht in der Regel von 62-10.000. Hierunter versteht man neben Aminogruppen, Thiogruppen oder Carboxylgruppen, vorzugsweise Hydroxylgruppen aufweisende Verbindungen, insbesondere 2 bis 8 Hydroxylgruppen aufweisende Verbindungen, speziell solche vom Molekulargewicht 100 bis 6000, vorzugsweise 2000 bis 6000, z.B. mindestens 2, in der Regel 2 bis 8, vorzugsweise aber 2 bis 6, Hydroxylgruppen aufweisende Polyether und Polyester und/oder modifizierte Pflanzenöle sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden. Bevorzugte Polyether sind solche auf Basis von TMP oder Sucrose.
   Weitere derartige Ausgangskomponenten sind Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die üblicherweise als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.
   Die Prepolymeren werden in an sich bekannter Weise hergestellt. Sie weisen in der Regel einen NCO-Gehalt von 2 bis 25 Gew.-% auf.

Die in der erfindungsgemäßen Mischung enthaltenen Hilfs- und Zusatzmittel b) sind z.B.
- Katalysatoren der an sich bekannten Art,
- oberflächenaktive Zusatzstoffe, wie Emulgatoren und Schaumstabilisatoren, wobei siliciumorganische Schaumstabilisatoren bevorzugt sind. Sie werden in der Regel in einer Menge von 1-5 Gew.-%, bezogen auf Prepolymer a), eingesetzt.
- Weichmacher, Zellregler der an sich bekannten Art wie Paraffine oder Fettalkohole oder Dimethylpolysiloxane, Pigmente, Farbstoffe, Flammschutzmittel der an sich bekannten Art, z.B. Trikresylphosphat, ferner Stabilisatoren gegen Alterungs- und Witterungseinflüsse und gegebenenfalls fungistatisch und bakteriostatisch wirkende Substanzen sowie Füllstoffe.

Diese Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reakti onsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z.B. auf den Seiten 103-113 beschrieben.

Als Treibmittel c), die einen Siedepunkt von unter 0°C/760 mm Hg aufweisen und gegebenenfalls im Druckbehälter verflüssigt und/oder gasförmig vorliegen, seien beispielsweise genannt:

Tetrafluorethan, Difluorethan, Dimethylether, Propan, Butan, Kohlendioxid, Distickstoffoxid.

Der fertige harte Polyurethanschaumstoff kann für Füllzwecke, z.B. zwischen Fensterrahmen und Mauerwerk, für Mauerdurchbrüche und Befestigungszwecke, z.B. für die Türzargenmontage, eingesetzt werden.

### Beispiele

Über geeignete Dosiereinrichtungen wurden die zur Prepolymerbildung vorgemischten Komponenten I und II in trockene Aerosoldosen gegeben

| 1. | Komponente I: | |
|---|---|---|
| | Polyesterpolyol | 100 g |
| | Oxypropyliertes Triethanolamin | |
| | Polyetherpolysiloxan | |
| | Tris(2-chlorisopropylphosphat) | |
| | N-substituiertes Morpholin | |

| | Komponente II: | |
|---|---|---|
| | aliphatisches Polyisocyanat (NCO-Gehalt 4,5 Gew.-%) auf Basis von trimerisiertem Hexamethylendiisocyanat (Isocyanuratgehalt: 5 Gew.-%) | 137 g |

| 2. | Komponente I: | |
|---|---|---|
| | Tris(2-chlorisopropylphosphat) | 100 g |
| | Polyetherpolysiloxan | |
| | N-substituiertes Morpholin | |

| | Komponente II: | |
|---|---|---|
| | NCO-Prepolymer (NCO-Gehalt 5 Gew.-%) auf Basis von trimerisiertem Toluylendiisocyanat (Isocyanuratgehalt: 7 Gew.-%) und Polyetherpolyolen | 325 g |

| 3. | Komponente I: | |
|---|---|---|
| | Tris(2-chlorisopropylphosphat) | 100 g |
| | Polyetherpolysiloxan | |
| | N-substituiertes Morpholin | |

| | Komponente II: | |
|---|---|---|
| | NCO-Prepolymer (NCO-Gehalt 4,5 Gew.-%) auf Basis von trimerisiertem Hexamethylendiisocyanat (Isocyanuratgehalt: 5 Gew.-%) | 325 g |

| 4. | Komponente I: | |
|---|---|---|
| | Tris(2-chlorisopropylphosphat) | 100 g |
| | Polyetherpolysiloxan | |
| | N-substituiertes Morpholin | |

| | Komponente II: | |
|---|---|---|
| | NCO-Prepolymer (NCO-Gehalt 4 Gew.-%) auf Basis von trimerisiertem Isophorondiisocyanat (Isocyanuratgehalt: 5 Gew.-%) und Polyetherpolyolen | 325 g |

| 5. | Komponente I: | |
|---|---|---|
| | Tris(2-chlorisopropylphosphat) | 100 g |
| | Polyetherpolysiloxan | |
| | N-substituiertes Morpholin | |

| | Komponente II: | |
|---|---|---|
| | NCO-Prepolymer (NCO-Gehalt 2 Gew.-%) auf Basis von von trimerisiertem Diphenylmethandiisocyanat (Isocyanuratgehalt 4 Gew.-%) und Polyetherpolyolen | 142 g |

Abschließend wurde in die Dosen die erforderliche Menge an Treibmittel (Tetrafluorethan) eingefüllt.

## Patentansprüche

1. Zu harten Polyurethanschaumstoffen führende, in einem Druckbehälter vorliegende Mischungen enthaltend
a) Isocyanatgruppen aufweisende Prepolymere, erhältlich durch Umsetzung von Isocyanurat- und gegebenenfalls Urethangruppen aufweisenden Polyisocyanaten mit einem Gehalt von Isocyanuratgruppen von mindestens 3 Gew.-% mit Verbindungen mit mindestens zwei gegenüber Isocyanaten reaktionsfähigen Wasserstoffatomen vom Molekulargewicht 62 bis 10 000, wobei der Gehalt an monomerem Polyisocyanat im Prepolymer unter 2 Gew.-% beträgt,
b) an sich bekannte Hilfs- und Zusatzstoffe und
c) Treibmittel mit einem Siedepunkt unterhalb von 0°C/760 mm Hg.

2. Zu harten Polyurethanschaumstoffen führende Mischungen nach Anspruch 1, dadurch gekennzeichnet, daß als Isocyanurat- und gegebenenfalls Urethangruppen aufweisendes Polyisocyanat ein aliphatisches und/oder cycloaliphatisches Polyisocyanat verwendet wird.

3. Zu harten Polyurethanschaumstoffen führende Mischungen nach Anspruch 1 und 2, dadurch gekennzeichnet, daß als Isocyanurat- und gegebenenfalls Urethangruppen aufweisendes Polyisocyanat Isophorondiisocyanat verwendet wird.

4. Zu harten Polyurethanschaumstoffen führende Mischungen nach Anspruch 1 und 2, dadurch gekennzeichnet, daß als Isocyanurat- und gegebenenfalls Urethangruppen aufweisendes Polyisocyanat Hexamethylendiisocyanat verwendet wird.

5. Zu harten Polyurethanschaumstoffen führende Mischungen nach Anspruch 1, dadurch gekennzeichnet, daß als Isocyanurat- und gegebenenfalls Urethangruppen aufweisendes Polyisocyanat eine Mischung aus einem aliphatischen und einem aromatischen Polyisocyanat verwendet wird.

6. Zu harten Polyurethanschaumstoffen führende Mischungen nach Anspruch 1, dadurch gekennzeichnet, daß als Isocyanurat- und gegebenenfalls Urethangruppen aufweisendes Polyisocyanat Toluylendiisocyanat verwendet wird, dessen Gehalt an Isocyanuratgruppen mindestens 3 Gew.-% beträgt.

7. Zu harten Polyurethanschaumstoffen führende Mischungen nach Anspruch 1 bis 6, dadurch gekennzeichnet, daß als Treibmittel Tetrafluorethan, Difluorethan, Dimethylether, Propan, Butan, Kohlendioxid, Distickstoffoxid, gegebenenfalls in Kombination, verwendet werden.

8. Verfahren zur Herstellung harter Polyurethanschaumstoffe unter Verwendung einer Mischung gemäß Anspruch 1-7 durch Aushärtung der Mischung nach ihrem Austreten aus einem Druckbehälter durch Einwirkung von Feuchtigkeit.

9. Verfahren zur Herstellung harter Polyurethanschaumstoffe unter Verwendung einer Mischung gemäß Anspruch 1-7 durch Aushärtung der Mischung durch Umsetzung mit reaktionsfähige Wasserstoffatome aufweisenden Verbindungen vom Molekulargewicht 18 bis 6 000 als Vernetzer.

## Claims

1. Mixtures for processing into rigid polyurethane foams, the mixtures being in a pressure vessel and containing
a) prepolymers which contain isocyanate groups and can be obtained by reacting polyisocyanates possessing isocyanurate groups and optionally urethane groups, and having a content of isocyanurate groups of at least 3 wt.%, with compounds having at least two hydrogen atoms reactive to isocyanates and a molecular weight of from 62 to 10,000, the content of monomeric polyisocyanate in the prepolymer being less than 2 wt.%,
b) auxiliary substances and additives known per se and
c) blowing agent having a boiling point of below 0°C at 760 mm Hg.

2. Mixtures for processing into rigid polyurethane foams according to claim 1, characterised in that the polyisocyanate possessing isocyanurate groups and optionally urethane groups used is an aliphatic and/or cycloaliphatic polyisocyanate.

3. Mixtures for processing into rigid polyurethane foams according to claims 1 and 2, characterised in that the polyisocyanate possessing isocyanurate groups and optionally urethane groups used is isophorone diisocyanate.

4. Mixtures for processing into rigid polyurethane foams according to claims 1 and 2, characterised in that the polyisocyanate possessing isocyanurate groups and optionally urethane groups used is hexamethylene diisocyanate.

5. Mixtures for processing into rigid polyurethane foams according to claim 1, characterised in that the polyisocyanate possessing isocyanurate groups and optionally urethane groups used is a mixture of an aliphatic and an aromatic polyisocyanate.

6. Mixtures for processing into rigid polyurethane foams according to claim 1, characterised in that the polyisocyanate possessing isocyanurate groups and optionally urethane groups used is tolylene diisocyanate with a content of isocyanurate groups of at least 3 wt.%.

7. Mixtures for processing into rigid polyurethane foams according to claims 1 to 6, characterised in that the blowing agent used is tetrafluoroethane, difluoroethane, dimethyl ether, propane, butane, carbon dioxide, nitrous oxide, optionally in combination.

8. Process for the production of rigid polyurethane foams, using a mixture according to claims 1 to 7, by curing the mixture through the action of moisture after discharge thereof from a pressure vessel.

9. Process for the production of rigid polyurethane foams, using a mixture according to claims 1 to 7, by curing the mixture by reaction with compounds having reactive hydrogen atoms and a molecular weight of from 18 to 6,000 as cross-linking agents.

## Revendications

1. Mélanges présents dans un récipient sous pression, donnant lieu à des mousses dures de polyuréthanne, contenant
a) des prépolymères présentant des groupes isocyanate, que l'on obtient par mise en réaction de polyisocyanates présentant des groupes isocyanurate et le cas échéant des groupes uréthane, dont la teneur en groupes isocyanurate s'élève à au moins 3% en poids, avec des composés comprenant au moins deux atomes d'hydrogène aptes à réagir vis-à-vis d'isocyanates, possédant un poids moléculaire de 62 à 10.000, la teneur du prépolymère en polyisocyanate monomère étant inférieure à 2% en poids,
b) des adjuvants et des additifs connus en soi, et
c) des agents moussants dont le point d'ébullition est inférieur à 0°C/760 mm Hg.

2. Mélanges selon la revendication 1 donnant lieu à des mousses dures de polyuréthanne, caractérisés en ce qu'on utilise, à titre de polyisocyanate présentant des groupes isocyanurate et le cas échéant des groupes uréthane, un polyisocyanate aliphatique et/ou cycloaliphatique.

3. Mélanges selon les revendications 1 et 2 donnant lieu à des mousses dures de polyuréthanne, caractérisés en ce qu'on utilise, à titre de polyisocyanate présentant des groupes isocyanurate et le cas échéant des groupes uréthane, l'isophoronediisocyanate.

4. Mélanges selon les revendications 1 et 2 donnant lieu à des mousses dures de polyuréthanne, caractérisés en ce qu'on utilise, à titre de polyisocyanate présentant des groupes isocyanurate et le cas échéant des groupes uréthane, l'hexaméthylènediisocyanate.

5. Mélanges selon la revendication 1 donnant lieu à des mousses dures de polyuréthanne, caractérisés en ce qu'on utilise, à titre de polyisocyanate présentant des groupes isocyanurate et le cas échéant des groupes uréthane, un mélange d'un polyisocyanate aliphatique et d'un polyisocyanate aromatique.

6. Mélanges selon la revendication 1 donnant lieu à des mousses dures de polyuréthanne, caractérisés en ce qu'on utilise, à titre de polyisocyanate présentant des groupes isocyanurate et le cas échéant des groupes uréthane, du toluylènediisocyanate dont la teneur en groupes isocyanurate s'élève à au moins 3% en poids.

7. Mélanges selon les revendications 1 à 6 donnant lieu à des mousses dures de polyuréthanne, caractérisés en ce qu'on utilise, à titre d'agent moussant, le tétrafluoréthane, le difluoréthane, l'éther diméthylique, le propane, le butane, le dioxyde de carbone, le dioxyde d'azote, le cas échéant en combinaison.

8. Procédé pour la préparation de mousses dures de polyuréthanne en utilisant un mélange selon les revendications 1 à 7, par durcissement du mélange après sa sortie d'un récipient sous pression, sous l'effet de l'humidité.

9. Procédé pour la préparation de mousses dures de polyuréthanne en utilisant un mélange selon les revendications 1 à 7, par durcissement du mélange à l'aide d'une mise en réaction avec les composés présentant des atomes d'hydrogène réactif, possédant un poids moléculaire de 18 à 6.000, à titre d'agent de réticulation.
